# EUROPÄISCHE PATENTSCHRIFT

(11) **EP 4 672 722 B1**
(45) Veröffentlichungstag und Bekanntmachung des Hinweises auf die Patenterteilung: **04.11.2026**
(21) Anmeldenummer: 24185395.1
(22) Anmeldetag: 28.06.2024
(51) Int. Cl.: H04L 67/55, G06F 9/455, G06F 9/445, H04L 67/12

(54) **VERFAHREN ZUR DATENÜBERMITTLUNG AN EMPFÄNGER INNERHALB EINER ABLAUFSTEUERUNGSUMGEBUNG UND HOST**
METHOD FOR TRANSMITTING DATA TO RECEIVERS WITHIN A SCHEDULING ENVIRONMENT AND HOST
PROCÉDÉ DE TRANSMISSION DE DONNÉES À DES RÉCEPTEURS DANS UN ENVIRONNEMENT DE PROGRAMMATION ET HÔTE

(43) Veröffentlichungstag der Anmeldung: 31.12.2025
(73) Patentinhaber: Siemens Aktiengesellschaft, 80333 München (DE)
(72) Erfinder: Albrecht, Harald, 90475 Nürnberg (DE); Balduf, Jochen, 76707 Hambrücken (DE); Fischer, Thomas, 91056 Erlangen (DE); Höme, Stephan, 91126 Schwabach (DE); Kerschbaum, Sven, 90768 Fürth (DE); Volkmann, Frank, 90475 Nürnberg (DE)
(74) Vertreter: Siemens Patent Attorneys

(56) Entgegenhaltungen:
- EP-A1- 4 206 831
- EP-A1- 4 346 183

## Beschreibung

Die vorliegende Erfindung betrifft ein Verfahren zur Datenübermittlung an Empfänger innerhalb einer Ablaufsteuerungsumgebung, insbesondere zur Übermittlung zeitkritischer Daten innerhalb eines Automatisierungssystems an virtualisierte Steuerungsanwendungen, und einen Host zur Durchführung eines solchen Verfahrens.

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

MQTT (MQ Telemetry Transport oder Message Queue Telemetry Transport) ist ein Nachrichtenprotokoll für Maschine-zu-Maschine-Kommunikation (M2M), das für eine Übertragung von Nachrichten mit Telemetriedaten zwischen einem Publisher-Kommunikationsgerät und einem Subscriber-Kommunikationsgerät vorgesehen ist (siehe http://mqtt.org/). Dabei führt ein MQTT-Broker für Informationen zu sämtlichen Publishern und Subscribern von Telemetriedaten eine zentrale Datenbank. Über den MQTT-Broker werden durch Publisher bzw. Subscriber Befehle entgegen genommen bzw. Daten erfasst.

OPC Unified Architecture (OPC UA) definiert entsprechend IEC 62541 ein M2M-Kommunikationsprotokoll und ermöglicht, beispielsweise Maschinenparameter, Regelungsgrößen oder Messwerte semantisch zu beschreiben, so dass derartige Maschinendaten automatisiert ausgewertet werden können. Insbesondere umfasst OPC UA ein objekt-orientiertes Namensraum-Konzept einschließlich Metadaten zur Objektbeschreibung.

Durch OPC UA Server wird ein Instanz- und Typsystem bereitgestellt, innerhalb dessen Clients navigieren und Informationen abrufen können. Darüber hinaus definiert OPC UA mehrere Discovery-Mechanismen zur Bekanntmachung von kompatiblen Automatisierungsgeräten und deren Funktionen bzw. Eigenschaften. Darüber hinaus ermöglicht OPC UA PubSub eine effiziente und skalierbare Kommunikation auf Basis von OPC UA. Ein wesentlicher ist ein Publisher-Subscriber-Modell, bei dem Geräte oder Softwarekomponenten, die als Publisher Daten erzeugen und veröffentlichen, über einen Broker Daten an Empfänger senden, die sich als Subscriber für bestimmte Daten interessieren. Dabei vermittelt der Broker vermittelt zwischen Publishern und Subscribern. Insbesondere senden Publisher senden Daten periodisch Perioden oder bei Änderungen, während Subscriber bestimmte Daten abonnieren.

In EP 3 975 502 B1 ist beschrieben, dass zur Bereitstellung von zeitkritischen Diensten mittels einer Ablaufsteuerungsumgebung für jeden Dienst jeweils zumindest eine Server-Komponente vorgesehen ist, die durch eine in die Ablaufsteuerungsumgebung ladbare und dort ausführbare Ablaufsteuerungskomponente gebildet wird. Eine Konfigurationseinheit für zumindest eine Gateway-Komponente eines die Ablaufsteuerungsumgebung umfassenden Teilnetzes ermittelt jeweils zu innerhalb des Teilnetzes gültigen Adressierungsinformationen der Server-Komponenten zugeordnete global gültige Zugangsinformationen. In Abhängigkeit von einem mittels der Konfigurationseinheit vorgegebenen Betriebsmodus werden eine oder mehrere parallel bzw. seriell verbundene Gateway-Komponenten verwendet. Die zumindest eine Gateway-Komponente leitet Dienstzugriffsanfragen entsprechend den Weiterleitungs- bzw. Filterregeln und dem Betriebsmodus an die Server-Komponenten weiter.

Aus EP 4 206 831 A1 ist bekannt, dass zeitkritische Steuerungsanwendungen mittels Ablaufsteuerungskomponenten bereitgestellt werden, die jeweils in eine mittels einer Server-Einrichtung gebildete Ablaufsteuerungsumgebung ladbar und dort ausführbar sind. Die Steuerungsanwendungen ermitteln aus periodisch erfassten Mess- bzw. Zustandsgrößen jeweils periodisch Stellgrößen für einen zu steuernden oder zu regelnden Prozess. Mehrere zueinander redundante Ablaufsteuerungskomponenten werden parallel zueinander ausgeführt. Die zueinander redundanten Ablaufsteuerungskomponenten ermitteln die Stellgrößen für einen jeweiligen Prozesszyklus, der auf einen jeweiligen Erfassungszeitpunkt der Mess- und/oder Zustandsgrößen folgt, sobald eine Mehrheit der zueinander redundanten Ablaufsteuerungskomponenten ein fehlerfreies Vorliegen der Mess- bzw. Zustandsgrößen für den jeweiligen Erfassungszeitpunkt signalisiert. Alternativ oder zusätzlich werden die ermittelten Stellgrößen unter Einschluss einer dem jeweiligen Prozesszyklus zugeordneten Sequenznummer an Aktoren und/oder Steuerungseinheiten übermittelt.

EP 4 346 183 A1 betrifft ein Verfahren zur Übermittlung zeitkritischer Daten innerhalb eines Kommunikationsnetzes von bzw. zu Steuerungsanwendungen, die jeweils mittels zumindest einer Ablaufsteuerungskomponente bereitgestellt werden, die in eine auf einem Host installierte Ablaufsteuerungsumgebung ladbar und dort ausführbar ist. Den Ablaufsteuerungskomponenten wird jeweils zumindest ein virtueller Netzadapter zugeordnet. Die Ablaufsteuerungskomponenten senden zur Reservierung von Ressourcen zum Senden bzw. Empfangen von zeitkritische Daten umfassenden Datenströmen jeweils einen Reservierungsauftrag an ein der Ablaufsteuerungsumgebung zugeordnetes Reservierungsmodul. Das Reservierungsmodul sendet entsprechend zugeordneten Dienstgüteanforderungen jeweils eine Reservierungsanfrage oder -bestätigung an weiterleitende Kommunikationsgeräte oder eine übergeordnete Steuerungseinheit. Außerdem veranlasst das Reservierungsmodul die Queue-Steuerungseinheit, dem virtuellen Netzadapter der jeweiligen Ablaufsteuerungskomponente entsprechend einer den Dienstgüteanforderungen zugeordneten Priorität Zugriff auf Sende-/Empfangsqueues eines physischen Netzadapters einzuräumen.

Aus der älteren europäischen Patentanmeldung EP 4 482 126 A1 ist bekannt, dass zumindest ein erstes Automatisierungsgerät zur Datenübermittlung innerhalb eines industriellen Automatisierungssystems Steuerungs-, Mess- bzw. Status-Daten umfassende Nutzdaten zum Empfang durch in zweiten Automatisierungsgeräten ablaufenden Steuerungsanwendungen verfügbar macht. Das erste Automatisierungsgerät sendet die Nutzdaten oder eine Nutzdaten-Auswahl umfassende Datagramme an eine oder mehrere Multicast-Gruppen. Die zweiten Automatisierungsgeräte registrieren sich als Teilnehmer selektiv zumindest in einer Multicast-Gruppe und weisen jeweils zumindest einen Netzwerkadapter auf, der den Multicast-Gruppen zugeordnete empfangene Datagramme über einen Socket, der einer Netzwerk-Protokollstapel-Funktionseinheit eines Betriebssystems des jeweiligen zweiten Automatisierungsgeräts zugeordnet ist, an eine Filtereinheit des jeweiligen zweiten Automatisierungsgeräts weiterleitet.

Besondere Anforderungen stellt eine Integration von Steuerungsanwendungen, die beispielsweise auf OPC UA PubSub basieren, in Virtualisierungsumgebungen, wie Docker, Kubernetes oder VMware, dar, insbesondere wenn automatisch verwaltete virtuelle Netzwerke innerhalb dieser Virtualisierungsumgebungen verwendet werden. Problematisch dabei ist, wenn Steuerungsanwendungen innerhalb von virtuellen Netzwerken ablaufen, die von äußeren Netzwerken entkoppelt sind. Sobald mehr als eine Steuerungsanwendung in einer solchen Umgebung ablaufen, ist ein einfaches Port-Forwarding nicht mehr möglich. Darüber hinaus sind Netzwerk- und Host-Ressourcen möglichst effizient zu verwenden. Gängige Publisher-Subscriber-Modelle führen infolge von breit übermittelten Publisher-Informationen jedoch zu einer erhöhten Ressourcenbelastungen in virtuellen Netzwerken und bei Steuerungsanwendungen, für welche diese empfangenen Informationen häufig gar nicht von Interesse sind.

Der vorliegenden Erfindung liegt die Aufgabe zugrunde, ein Verfahren zur Datenübermittlung an Empfänger innerhalb einer Ablaufsteuerungsumgebung anzugeben, das eine effiziente Nutzung von Netzwerk- und Host-Ressourcen bei einer Bereitstellung von Nutzdaten an eine Vielzahl potentieller Empfänger und eine einfache Integration virtualisierter Steuerungsanwendungen ermöglicht, sowie eine geeignete Vorrichtung zur Durchführung des Verfahrens zu schaffen.

Diese Aufgabe wird erfindungsgemäß durch ein Verfahren mit den in Anspruch 1 genannten Merkmalen und durch einen Host mit den in Anspruch 12 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur Datenübermittlung an Empfänger innerhalb einer Ablaufsteuerungsumgebung werden Nutzdaten umfassende Nachrichten zyklisch bzw. ereignisgesteuert durch einen Sender an eine Vielzahl von Empfängern gesendet, die für einen fortlaufenden Empfang der Nutzdaten vorgesehen sind. Die Empfänger umfassen jeweils zumindest eine Ablaufsteuerungskomponente, die entsprechend vorgebbaren Konfigurationsdaten in die auf einem Host installierte Ablaufsteuerungsumgebung ladbar und dort ausführbar ist. Der Sender der Nutzdaten ist ein OPC UA PubSub Publisher, während die zumindest eine Ablaufsteuerungskomponente ein OPC UA PubSub Subscriber ist.

Die Ablaufsteuerungsumgebung umfasst erfindungsgemäß ein virtuelles Kommunikationsnetz, innerhalb dessen die Ablaufsteuerungskomponenten adressierbar sind. Durch den Host werden der Ablaufsteuerungsumgebung Ressourcen eines Netzwerkadapters des Host verfügbar gemacht. Vorzugsweise laufen die Ablaufsteuerungskomponenten innerhalb der auf dem Host installierten Ablaufsteuerungsumgebung isoliert voneinander ab und nutzen gemeinsam einen Betriebssystemkern des Host bzw. den Netzwerkadapter des Host nutzen. Die Ablaufsteuerungskomponenten können beispielsweise Virtuelle Maschinen, Container, WebAssembly- oder Java Bytecode sein, während die Ablaufsteuerungsumgebung ein Hypervisor, eine Container-Laufzeitumgebung, eine Web-Assembly-Laufzeitumgebung oder eine Java Virtual Machine sein kann.

Die Ablaufsteuerungskomponenten registrieren sich zum Empfang der Nutzdaten als Teilnehmer selektiv zumindest in einer Teilnehmer-Gruppe. Anhand der Konfigurationsdaten, die der jeweiligen Ablaufsteuerungskomponente zugeordnet sind, leitet eine dem Netzwerkadapter zugeordnete Filter-Komponente die Nachrichten an die Ablaufsteuerungskomponenten weiter. Dabei können die Konfigurationsdaten insbesondere jeweils einen zum Empfang der Nutzdaten geöffneten Port sowie eine Host-interne Adresse der jeweiligen Ablaufsteuerungskomponente, einen der jeweiligen Ablaufsteuerungskomponente zum Empfang der Nutzdaten zugeordneten Teilnehmer-Ressourcen-Lokator bzw. einen zum Empfang der Nutzdaten durch die jeweilige Ablaufsteuerungskomponente verwendeten Identifikator umfassen. Vorzugsweise werden die Nutzdaten umfassenden Nachrichten durch den Sender per Multicast oder Broadcast an die Vielzahl von Empfängern gesendet, die für den fortlaufenden Empfang der Nutzdaten vorgesehen sind, In diesem Fall ist die Teilnehmer-Gruppe eine Multicast- oder Broadcast-Gruppe.

Die durch die Filter-Komponente zur Weiterleitung der Nutzdaten verwendeten Konfigurationsdaten werden erfindungsgemäß mittels eines OPC UA FX Connection Managers (FX CM) ermittelt. Dabei kann effizient ausgenutzt werden, dass im OPC UA FX Connection Manager die Teilnehmer-Ressourcen-Lokatoren von miteinander logisch zu verbindenden OPC UA PubSub Publishern und Subscribern vorliegen.

Insgesamt ermöglicht das Verfahren eine effiziente und zielgerichtete Kommunikation mit Ablaufsteuerungskomponenten innerhalb einer Ablaufsteuerungsumgebung. Dies wird insbesondere dadurch erreicht, dass sich die Ablaufsteuerungskomponenten selektiv in Teilnehmer-Gruppen registrieren können, um nur relevante Daten zu empfangen, und dass die Filter-Komponente Nachrichten basierend auf den Konfigurationsdaten an die jeweiligen Ablaufsteuerungskomponenten weiterleitet bzw. verwirft. Auf diese Weise wird eine nachteilige Weiterleitung unerwünschter Daten vermieden.

Eine hinsichtlich zeitkritischer Nutzdaten besonders performante Implementierung der vorliegenden Erfindung ergibt sich beispielsweise, wenn der Netzwerkadapter des Host den Teilnehmer-Gruppen zugeordnete empfangene Nachrichten über einen Socket, der einer Netzwerk-Protokollstapel-Funktionseinheit, insbesondere IP-Stack, eines Betriebssystems des Host zugeordnet ist, an die Filter-Komponente weiterleitet. Dabei erfolgt mittels des Socket ohne Bearbeitung durch das Betriebssystem des Host ein direktes Weiterleiten oder Verwerfen der Nachrichten. Das Socket ist vorzugsweise ein Express Data Path Socket, XDP Socket.

Entsprechend einer vorteilhaften Ausgestaltung der vorliegenden Erfindung werden mittels eines Port-Detektors der jeweiligen Ablaufsteuerungskomponente zugeordnete offene Ports, insbesondere UDP-Ports, ermittelt. Dabei kann ein Erkennen der offenen Ports mittels eines regelmäßigen Abtastens von Rechenprozessen zugeordneten Ports und über diesen Ports zugeordnete Schnittstellen eines Betriebssystems des Host erfolgen. Auf diese Weise können Teilnehmer für einen Empfang der Nutzdaten zuverlässig und ohne großen Aufwand ermittelt werden.

Entsprechend einer vorteilhaften Ausgestaltung der vorliegenden Erfindung wird mittels eines Subscriber-Detektors, der einem Security Key Service (SKS) für eine gesicherte Publisher-Subscriber-Kommunikation zugeordnet ist, Adressierungsinformationen von OPC UA PubSub Subscribern ermittelt werden und bei dem die Adressierungsinformationen in Host-interne Adressen der Ablaufsteuerungskomponenten aufgelöst werden, anhand dessen der Subscriber-Detektor oder Security Key Service die Filter-Komponente konfiguriert.

Entsprechend einer weiteren vorteilhaften Ausgestaltung der vorliegenden Erfindung registrieren sich die Ablaufsteuerungskomponenten als OPC UA PubSub Subscriber mit einem dem jeweiligen OPC UA PubSub Subscriber oder einem der jeweiligen Ablaufsteuerungskomponente zugeordneten Identifikator bei einem OPC UA Global Discovery Service zum Empfang der Nutzdaten. Anhand der durch die Ablaufsteuerungskomponenten zur Registrierung verwendeten Identifikatoren können einfach und sicher Host-interne Adressen der Ablaufsteuerungskomponenten ermittelt werden. Dementsprechend wird die Filter-Komponente anhand der ermittelten Host-internen Adressen konfiguriert.

Der erfindungsgemäße Host ist zur Durchführung eines Verfahrens entsprechend vorangehenden Ausführungen vorgesehen und umfasst einen Netzwerkadapter, eine dem Netzwerkadapter zugeordneten Filter-Komponente, eine auf dem Host installierte Ablaufsteuerungsumgebung, zumindest einen Empfänger und einem OPC UA FX Connection Manager. Der Empfänger ist zum Empfang von Nutzdaten umfassenden Nachrichten eingerichtet, die zyklisch bzw. ereignisgesteuert durch einen Sender an eine Vielzahl von Empfängern, die für einen fortlaufenden Empfang der Nutzdaten vorgesehen sind, gesendet werden. Dabei ist der Sender der Nutzdaten ein OPC UA PubSub Publisher. Außerdem umfasst der Empfänger zumindest eine Ablaufsteuerungskomponente, die entsprechend vorgebbaren Konfigurationsdaten in die auf dem Host installierte Ablaufsteuerungsumgebung ladbar und dort ausführbar ist.

Die auf dem Host installierte Ablaufsteuerungsumgebung umfasst erfindungsgemäß ein virtuelles Kommunikationsnetz, innerhalb dessen die zumindest eine Ablaufsteuerungskomponente adressierbar ist. Dabei ist die zumindest eine Ablaufsteuerungskomponente ein OPC UA PubSub Subscriber. Darüber hinaus ist der Host dafür eingerichtet, der Ablaufsteuerungsumgebung Ressourcen des Netzwerkadapters verfügbar zu machen. Demgegenüber ist die Ablaufsteuerungskomponente dafür eingerichtet, sich zum Empfang der Nutzdaten als Teilnehmer selektiv zumindest in einer Teilnehmer-Gruppe zu registrieren. Des Weiteren ist die Filter-Komponente dafür eingerichtet, die Nachrichten anhand der Konfigurationsdaten, die der zumindest einen Ablaufsteuerungskomponente zugeordnet sind, an die Ablaufsteuerungskomponente weiterzuleiten. Schließlich ist der OPC UA FX Connection Manager dafür eingerichtet, die durch die Filter-Komponente zur Weiterleitung der Nutzdaten verwendeten Konfigurationsdaten zu ermitteln. Dabei liegen im OPC UA FX Connection Manager die Teilnehmer-Ressourcen-Lokatoren von miteinander logisch zu verbindenden OPC UA PubSub Publishern und Subscribern vor.

Die vorliegende Erfindung wird nachfolgend an einem Ausführungsbeispiel anhand der Zeichnung näher erläutert. Es zeigt
- Figur 1: eine Anordnung mit einem als OPC UA PubSub Publisher ausgestalteten Sender von Nutzdaten und einem Host, der zumindest einen als OPC UA PubSub Subscriber ausgestalteten Empfänger der Nutzdaten umfasst,
- Figur 2: eine Ausführungsvariante für eine Subscriber-Identifikation mittels eines Port-Detektors,
- Figur 3: eine Ausführungsvariante für eine Subscriber-Identifikation mittels eines OPC UA FX Connection Managers,
- Figur 4: eine Ausführungsvariante für eine Subscriber-Identifikation mittels eines Security Key Service,
- Figur 5: eine Ausführungsvariante für eine Subscriber-Identifikation mittels OPC UA Global Discovery.

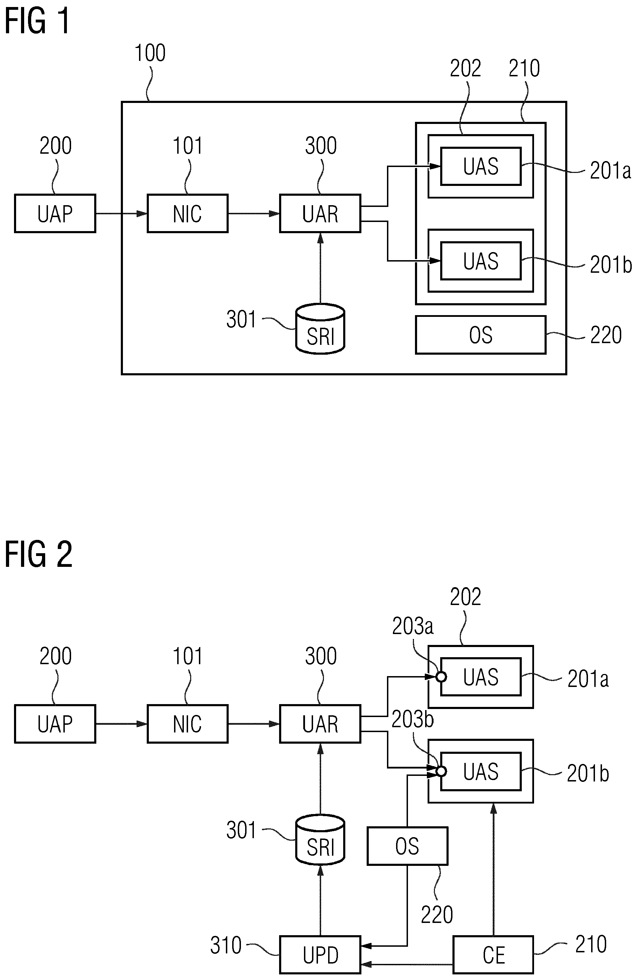

Die in Figur 1 dargestellte Anordnung umfasst einen exemplarisch als OPC UA PubSub Publisher ausgestalteten Sender 200 von Nutzdaten und einen Host 100, der zumindest einen exemplarisch als OPC UA PubSub Subscriber ausgestalteten Empfänger der Nutzdaten umfasst. Die Anwendung der vorliegenden Erfindung ist nicht auf OPC UA PubSub zur Bereitstellung von Nutzdaten an eine Vielzahl von Empfängern beschränkt, die einen Empfang der Nutzdaten abonnieren. Anstelle von OPC UA PubSub kann eine Vielzahl alternativer, insbesondere Broker-basierter Netzwerk-Protokolle, wie etwa MQTT (Message Queuing Telemetry Transport), XMPP (Extensible Messaging and Presence Protocol), CoAP (Constrained Application Protocol) oder auch HTTP (Hypertext Transfer Protocol) mit REST-Programmierschnittstell (Representational State Transfer), verwendet werden. Auf derartige alternative Netzwerk-Protokolle sind nachfolgende Ausführungen gleichermaßen übertragbar.

Der Host 100 umfasst einen Netzwerkadapter 101, eine dem Netzwerkadapter 101 zugeordnete Filter-Komponente 300 (UAR - UA Router), eine auf dem Host 100 installierte Ablaufsteuerungsumgebung 210 und zumindest einen Empfänger 201a, 201b. Der jeweilige Empfänger 201a, 201b ist zum Empfang von Nutzdaten umfassenden Nachrichten eingerichtet, die zyklisch bzw. ereignisgesteuert durch den Sender 200 an eine Vielzahl von Empfängern, die für einen fortlaufenden Empfang der Nutzdaten vorgesehen sind, gesendet werden. Insbesondere umfassen die Empfänger 202 jeweils eine Ablaufsteuerungskomponente 202, die einen OPC UA PubSub Subscriber implementiert sowie entsprechend vorgebbaren Konfigurationsdaten in die auf dem Host 100 installierte Ablaufsteuerungsumgebung 210 ladbar und dort ausführbar ist. Dabei umfasst die Ablaufsteuerungsumgebung 210 ein virtuelles Kommunikationsnetz, innerhalb dessen die Ablaufsteuerungskomponenten 202 adressierbar sind. Darüber hinaus ist der Host 100 dafür eingerichtet, der Ablaufsteuerungsumgebung 210 Ressourcen des Netzwerkadapters 101 verfügbar zu machen.

Im vorliegenden Ausführungsbeispiel laufen die Ablaufsteuerungskomponenten 202 innerhalb der auf dem Host 100 installierten Ablaufsteuerungsumgebung 210 isoliert voneinander ab und nutzen gemeinsam einen Betriebssystemkern des Host 100 bzw. den Netzwerkadapter 101 des Host 100. Die Ablaufsteuerungskomponenten 202 können beispielsweise Virtuelle Maschinen, Container, WebAssembly- oder Java Bytecode sein. Demgegenüber kann die Ablaufsteuerungsumgebung 210 ein Hypervisor, eine Container-Laufzeitumgebung, eine Web-Assembly-Laufzeitumgebung oder eine Java Virtual Machine sein.

Die Ablaufsteuerungskomponenten 202 sind jeweils dafür eingerichtet, sich zum Empfang der Nutzdaten als Teilnehmer selektiv zumindest in einer Multicast-Gruppe zu registrieren. Dabei werden die Nutzdaten umfassenden Nachrichten durch den Sender 200 beispielsweise per Multicast oder Broadcast an die Vielzahl von Empfängern, die für den fortlaufenden Empfang der Nutzdaten vorgesehen sind, gesendet werden. In diesem Fall ist die Teilnehmer-Gruppe eine Multicast- oder Broadcast-Gruppe.

Die Filter-Komponente 300 ist dafür eingerichtet, die Nachrichten anhand der Konfigurationsdaten, die der jeweiligen Ablaufsteuerungskomponente 202 zugeordnet sind, an die Ablaufsteuerungskomponente 202 weiterzuleiten. Im vorliegenden Ausführungsbeispiel umfassen die Konfigurationsdaten jeweils zumindest folgende Informationen:
- einen zum Empfang der Nutzdaten geöffneten Port sowie eine Host-interne Adresse der jeweiligen Ablaufsteuerungskomponente,
- einen der jeweiligen Ablaufsteuerungskomponente zum Empfang der Nutzdaten zugeordneten Teilnehmer-Ressourcen-Lokator bzw.
- einen zum Empfang der Nutzdaten durch die jeweilige Ablaufsteuerungskomponente verwendeten Identifikator.

Im vorliegenden Ausführungsbeispiel leitet der Netzwerkadapter 101 des Host 100 den Teilnehmer-Gruppen zugeordnete empfangene Nachrichten über einen Socket, der einer Netzwerk-Protokollstapel-Funktionseinheit, insbesondere IP-Stack, eines Betriebssystems 220 des Host 100 zugeordnet ist, an die Filter-Komponente 300 weiter. Dabei erfolgt mittels des Socket ohne Bearbeitung durch das Betriebssystem 220 des Host 100 ein direktes Weiterleiten oder Verwerfen der Nachrichten. Das Socket ist vorzugsweise ein XDP Socket (Express Data Path Socket).

Die Filter-Komponente 300 kann vorteilhafterweise als eBPF-Programm (Extended Berkeley Packet Filter) ausgeführt sein, das die vom Netzwerkadapter 101 empfangenen Nachrichten als XDP Programm rasch und effizient vorverarbeitet, noch bevor beispielsweise jegliche weitere Verarbeitung durch einen Linux Netzwerk-Stack o.ä. erfolgt. Bei entsprechend ausgerüsteten Netzwerkadaptern 101 kann das XDP Programm auch von einem Linux-Kernel zur Abarbeitung direkt auf dem Netzwerkadapter 101 in diesen transferiert werden. Dem XDP Programm ist im vorliegenden Ausführungsbeispiel eine Konfigurationsdatenbank 301 zugeordnet, die das XDP Programm hinsichtlich seines Verhaltens beeinflusst. Die Konfigurationsdatenbank 301 enthält dazu beispielsweise folgende Informationen für eine Identifikation von Subscriber-Nachrichten-Strömen anhand bestimmter Nachrichtenfelder bzw. Nachrichten-Fingerabdrücke (Hashwerte):
- Publisher MAC und/oder IP Adresse,
- VLAN ID,
- UDP Port,
- Publisherld,
- WriteGroupld,
- DataSetWriterld.

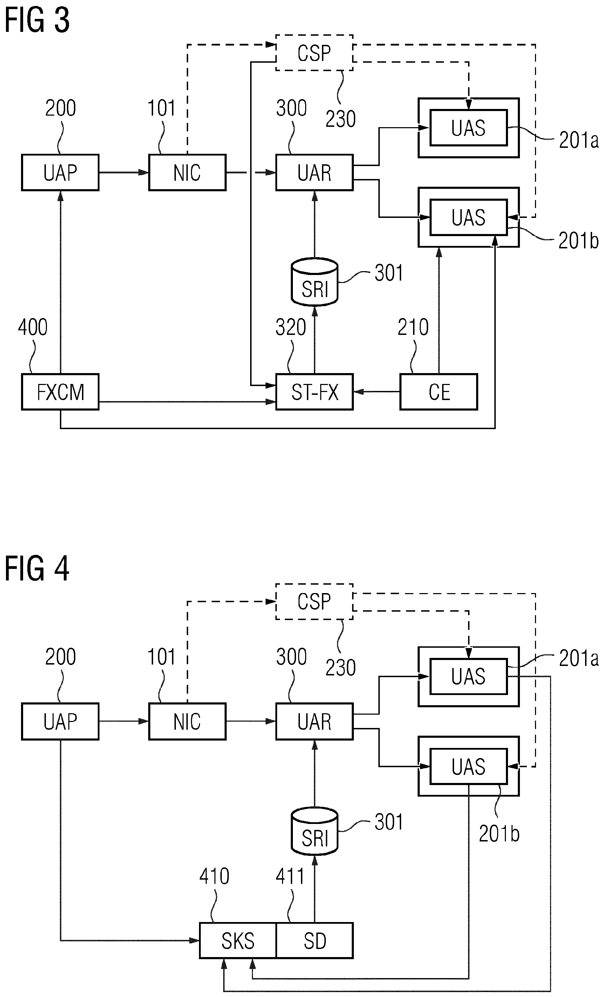

Entsprechend der in Figur 2 dargestellten Ausführungsvariante kann eine Subscriber-Identifikation mittels eines Port-Detektors 310 erfolgen. Gegenüber Figur 1 sind in Figur 2 aus Übersichtsgründen nur Komponenten dargestellt, die für die Subscriber-Identifikation wesentlich sind. Dies gilt auch für die nachstehend anhand der Figuren 3 bis 5 beschriebenen alternativen Ausführungsvarianten.

Mittels des Port-Detektors 310 werden der jeweiligen Ablaufsteuerungskomponente 202 zugeordnete offene Ports 203a, 203b, insbesondere UDP-Ports, ermittelt. Im vorliegenden Ausführungsbeispiel wird ausgenutzt, dass OPC UA PubSub den UDP-Port 4840 zur Verwendung in einer IP-basierten Publisher-Subscriber-Kommunikation definiert. Dieser UDP-Port ist insbesondere von einem für eine OPC UA Client-Server-Kommunikation benutzten TCP-Port 4840 zu unterscheiden. Der Port-Detektor 310 trägt die ermittelten offenen Ports 203a, 203b zusammen mit host-internen IP-Adressen der Ablaufsteuerungskomponenten 202 als Subscriber Routing Informationen (SRI) in die Konfigurationsdatenbank 301 ein. Ein Erkennen der offenen Ports 203a, 203b kann beispielsweise mittels eines regelmäßigen Abtastens von Rechenprozessen zugeordneten Ports und über diesen Ports zugeordnete Schnittstellen des Betriebssystems 220 des Host 100 erfolgen. Beispielsweise kann dies durch Auslesen von Pseudo-Dateien /proc/$PID/net/udp des Linux-Kernels geschehen. Ergänzend oder alternativ kann per eBPF direkt überwacht werden, wenn ein Anwendungsprozess über einen Betriebssystem-Syscall einen UDP-Socket auf Port 4840 öffnet und später wieder schließt. Der Port-Detektor 310 ermittelt dann eine Zuordnung zwischen einem Prozess, der einen Socket geöffnet hat, und der zugeordneten Ablaufsteuerungskomponente 202, insbesondere einem Container, unter Zuhilfenahme von Informationen, die von der Ablaufsteuerungsumgebung 210, insbesondere einer Container Engine, bereitgestellt werden. Damit ist die IP-Adresse der jeweiligen Ablaufsteuerungskomponente bekannt, die in die Konfigurationsdatenbank 203 eingetragen wird. Anschließend kann die Filter-Komponente 300 anhand der in der Konfigurationsdatenbank 203 hinterlegten Informationen konfiguriert werden.

Bei der in Figur 3 dargestellten alternativen Ausführungsvariante erfolgt die Subscriber-Identifikation mittels eines OPC UA FX Connection Managers 400. Dabei werden die durch die Filter-Komponente 300 zur Weiterleitung der Nutzdaten verwendeten Konfigurationsdaten mittels des OPC UA FX Connection Managers 400 ermittelt. Dabei wird ausgenutzt, dass im OPC UA FX Connection Manager 400 die Teilnehmer-Ressourcen-Lokatoren von miteinander logisch zu verbindenden OPC UA PubSub Publishern und Subscribern vorliegen. Der OPC UA FX Connection Manager 400 konfiguriert die Empfänger 201a, 201b per Client-Server-Kommunikation über die extern sichtbaren Teilnehmer-Ressourcen-Lokatoren der Empfänger 201a, 201b. Ein Subscriber Tracker for FX 320 liest Subscriber-Informationen aus dem OPC UA FX Connection Manager 400 aus und erfährt hierüber, welche per Teilnehmer-Ressourcen-Lokatoren identifizierbare Empfänger 201a, 201b Publisher-Nachrichten mit welchen Kriterien, z.B. Publisherld, benötigen. Mit Adress- und Port-Weiterleitungs-Informationen aus der Ablaufsteuerungsumgebung 210 kann der Subscriber Tracker for FX nun die Subscriber Routing Informationen für die Konfigurationsdatenbank 301generieren. Anhand der Subscriber Routing Informationen kann die Filter-Komponente 300 daraufhin Publisher-Nachrichten an die Empfänger 201a, 201b, insbesondere OPC UA PubSub Subscriber, weiterleiten.

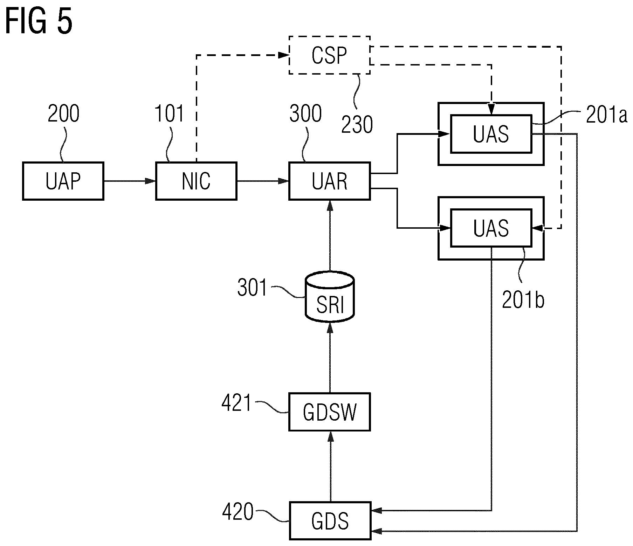

Sofern die Empfänger 201a, 201b nicht auf jeweils eigene TCP-Ports gebunden sind, sondern ein OPC UA Client/Server-Proxy 230 eingesetzt wird, werden der OPC UA FX Connection Manager 400 und der OPC UA Client/Server-Proxy 230 miteinander verbunden, so dass der OPC UA FX Connection Manager 400 vom OPC UA Client/Server-Proxy 230 Informationen über eine Abbildung der extern sichtbaren Teilnehmer-Ressourcen-Lokatoren auf intern gültige Teilnehmer-Ressourcen-Lokatoren der Ablaufsteuerungskomponenten 202 erhält. Im Übrigen behandelt der OPC UA Client/Server-Proxy 230 TCP-basierten OPC UA-Datenverkehr, während die Filter-Komponente 300 für UDP-basierten OPC UA-Datenverkehr zuständig ist. Der OPC UA Client/Server-Proxy 230 kann optional in entsprechender Weise auch für die in den Figuren 4 und 5 dargestellten Ausführungsvarianten verwendet werden.

Entsprechend der in Figur 4 dargestellten alternativen Ausführungsvariante erfolgt die Subscriber-Identifikation mittels eines Security Key Service 410 für eine gesicherte Publisher-Subscriber-Kommunikation. Anhand des Security Key Service 410 können Kommunikationsteilnehmer für die gesicherte Publisher-Subscriber-Kommunikation benötigtes Schlüsselmaterial unter Nennung einer Security Group ID erfragen. Derartige Anfragen erfolgen über einen gesicherten Client-Server-Kanal. Mittels eines Subscriber-Detektors 411, der dem Security Key Service 410 zugeordnet ist, werden Adressierungsinformationen von OPC UA PubSub Subscribern ermittelt. Die Adressierungsinformationen werden in Host-interne Adressen der Ablaufsteuerungskomponenten 202 aufgelöst und als Subscriber Routing Informationen in der Konfigurationsdatenbank 301 hinterlegt. Anhand dessen konfiguriert der Subscriber-Detektor 411 bzw. Security Key Service 410 die Filter-Komponente 300 für die Weiterleitung der der Nutzdaten an die Ablaufsteuerungskomponenten 202.

Bei der in Figur 5 dargestellten alternativen Ausführungsvariante erfolgt die Subscriber-Identifikation mittels eines OPC UA Global Discovery Service (GDS) 420. Dabei registrieren sich die Ablaufsteuerungskomponenten 202 als OPC UA PubSub Subscriber beim OPC UA Global Discovery Service 420 insbesondere mit einem dem jeweiligen OPC UA PubSub Subscriber oder einem der jeweiligen Ablaufsteuerungskomponente 202 zugeordneten Identifikator zum Empfang der Nutzdaten. Optional können sich Subscriber mit weiteren Informationen registrieren, wie einem (logischen) Hostnamen oder einer von einer Virtualisierungsumgebung an den jeweiligen Subscriber zugewiesenen Identifikation. Die zur Registrierung verwendeten Informationen werden von einem GDS Watcher 421 als Subskriptionsmanager laufend überwacht. Bei Änderungen, welche die Virtualisierungsumgebung betreffen, werden die zur Registrierung verwendeten Informationen in der Konfigurationsdatenbank 301 entsprechend aktualisiert. Anhand der durch die Ablaufsteuerungskomponenten 202 zur Registrierung verwendeten Identifikatoren werden somit insbesondere Host-interne Adressen der Ablaufsteuerungskomponenten 202 ermittelt, und die Filter-Komponente 300 wird anhand der ermittelten Host-internen Adressen bzw. anhand der in der Konfigurationsdatenbank 301 hinterlegten Informationen konfiguriert. Darüber hinaus kann der GDS Watcher 421 eine Subscriber-Workload der Virtualisierungsumgebung überwachen. Wird eine Subscriber-Workload beendet, insbesondere vorzeitig, dann entfernt der GDS Watcher 421 zum betreffenden Subscriber gehörige Weiterleitungen von Publisher-Nachrichten. Grundsätzlich kann ein Subscriber ungültige Subscriber-Registrierungen im OPC UA Global Discovery Service 420 eigenständig löschen bzw. dies auf Wunsch veranlassen.

## Patentansprüche

1. Verfahren zur Datenübermittlung an Empfänger innerhalb einer Ablaufsteuerungsumgebung, bei dem
- Nutzdaten umfassende Nachrichten zyklisch und/oder ereignisgesteuert durch einen Sender (200) an eine Vielzahl von Empfängern (201a, 201b), die für einen fortlaufenden Empfang der Nutzdaten vorgesehen sind, gesendet werden,
- die Empfänger (201a, 201b) jeweils zumindest eine Ablaufsteuerungskomponente (202) umfassen, die entsprechend vorgebbaren Konfigurationsdaten in die auf einem Host (100) installierte Ablaufsteuerungsumgebung (210) ladbar und dort ausführbar ist, wobei die Ablaufsteuerungsumgebung ein virtuelles Kommunikationsnetz umfasst, innerhalb dessen die Ablaufsteuerungskomponenten adressierbar sind,
- der Ablaufsteuerungsumgebung (210) durch den Host (100) Ressourcen eines Netzwerkadapters (101) des Host verfügbar gemacht werden,
- sich die Ablaufsteuerungskomponenten (202) zum Empfang der Nutzdaten als Teilnehmer selektiv zumindest in einer Teilnehmer-Gruppe registrieren,
**dadurch gekennzeichnet, dass**
- eine dem Netzwerkadapter (101) zugeordnete Filter-Komponente (300) die Nachrichten anhand der Konfigurationsdaten, die der jeweiligen Ablaufsteuerungskomponente (202) zugeordnet sind, an die Ablaufsteuerungskomponenten (202) weiterleitet,
- der Sender (200) der Nutzdaten ein OPC UA PubSub Publisher und die zumindest eine Ablaufsteuerungskomponente (202) ein OPC UA PubSub Subscriber ist,
- die durch die Filter-Komponente (300) zur Weiterleitung der Nutzdaten verwendeten Konfigurationsdaten mittels eines OPC UA FX Connection Managers (400) ermittelt werden, wobei im OPC UA FX Connection Manager die Teilnehmer-Ressourcen-Lokatoren von miteinander logisch zu verbindenden OPC UA PubSub Publishern und Subscribern vorliegen.

2. Verfahren nach Anspruch 1,
bei dem die Konfigurationsdaten jeweils einen zum Empfang der Nutzdaten geöffneten Port sowie eine Host-interne Adresse der jeweiligen Ablaufsteuerungskomponente (202), einen der jeweiligen Ablaufsteuerungskomponente zum Empfang der Nutzdaten zugeordneten Teilnehmer-Ressourcen-Lokator und/oder einen zum Empfang der Nutzdaten durch die jeweilige Ablaufsteuerungskomponente verwendeten Identifikator umfassen.

3. Verfahren nach einem der Ansprüche 1 oder 2,
bei dem mittels eines Port-Detektors (310) der jeweiligen Ablaufsteuerungskomponente (202) zugeordnete offene Ports (203a, 203b), insbesondere UDP-Ports, ermittelt werden.

4. Verfahren nach Anspruch 3,
bei dem ein Erkennen der offenen Ports (203a, 203b) mittels eines regelmäßigen Abtastens von Rechenprozessen zugeordneten Ports und über diesen Ports zugeordnete Schnittstellen eines Betriebssystems (220) des Host (100) erfolgt.

5. Verfahren nach einem der Ansprüche 3 oder 4,
bei dem mittels eines Subscriber-Detektors, der einem Security Key Service für eine gesicherte Publisher-Subscriber-Kommunikation zugeordnet ist, Adressierungsinformationen von OPC UA PubSub Subscribern ermittelt werden und bei dem die Adressierungsinformationen in Host-interne Adressen der Ablaufsteuerungskomponenten aufgelöst werden, anhand dessen der Subscriber-Detektor oder Security Key Service die Filter-Komponente konfiguriert.

6. Verfahren nach einem der Ansprüche 3 bis 5,
bei dem sich die Ablaufsteuerungskomponenten (202) als OPC UA PubSub Subscriber mit einem dem jeweiligen OPC UA PubSub Subscriber oder einem der jeweiligen Ablaufsteuerungskomponente zugeordneten Identifikator bei einem OPC UA Global Discovery Service zum Empfang der Nutzdaten registrieren, bei dem anhand der durch die Ablaufsteuerungskomponenten zur Registrierung verwendeten Identifikatoren Host-interne Adressen der Ablaufsteuerungskomponenten ermittelt werden und bei dem die Filter-Komponente (300) anhand der ermittelten Host-internen Adressen konfiguriert wird.

7. Verfahren nach einem der Ansprüche 1 bis 6,
bei dem die Ablaufsteuerungskomponenten (202) innerhalb der auf dem Host (100) installierten Ablaufsteuerungsumgebung (210) isoliert voneinander ablaufen und gemeinsam einen Betriebssystemkern des Host und/oder den Netzwerkadapter (101) des Host nutzen.

8. Verfahren nach Anspruch 7,
bei dem die Ablaufsteuerungskomponenten (202) Virtuelle Maschinen, Container, WebAssembly- oder Java Bytecode sind und bei dem die Ablaufsteuerungsumgebung (210) ein Hypervisor, eine Container-Laufzeitumgebung, eine Web-Assembly-Laufzeitumgebung oder eine Java Virtual Machine ist.

9. Verfahren nach einem der Ansprüche 1 bis 8,
bei dem der Netzwerkadapter (101) des Host (100) den Teilnehmer-Gruppen zugeordnete empfangene Nachrichten über einen Socket, der einer Netzwerk-Protokollstapel-Funktionseinheit eines Betriebssystems (220) des Host zugeordnet ist, an die Filter-Komponente (300) weiterleitet, wobei mittels des Socket ein direktes Weiterleiten oder Verwerfen der Nachrichten erfolgt.

10. Verfahren nach Anspruch 9,
bei dem das Socket ein Express Data Path Socket, XDP Socket, ist.

11. Verfahren nach einem der Ansprüche 1 bis 10,
bei dem die Nutzdaten umfassenden Nachrichten durch den Sender per Multicast oder Broadcast an die Vielzahl von Empfängern, die für den fortlaufenden Empfang der Nutzdaten vorgesehen sind, gesendet werden und bei dem die Teilnehmer-Gruppe eine Multicast- oder Broadcast-Gruppe ist.

12. Host zur Durchführung eines Verfahrens nach einem der Ansprüche 1 bis 11 mit
- einem Netzwerkadapter (101), einer dem Netzwerkadapter zugeordneten Filter-Komponente (300), einer auf dem Host installierten Ablaufsteuerungsumgebung zumindest einem Empfänger (201a, 201b) und einem OPC UA FX Connection Manager (400),
- wobei der Empfänger (201a, 201b) zum Empfang von Nutzdaten umfassenden Nachrichten eingerichtet ist, die zyklisch und/oder ereignisgesteuert durch einen Sender (200) an eine Vielzahl von Empfängern, die für einen fortlaufenden Empfang der Nutzdaten vorgesehen sind, gesendet werden, wobei der Sender (200) der Nutzdaten ein OPC UA PubSub Publisher ist,
- wobei der Empfänger (201a, 201b) zumindest eine Ablaufsteuerungskomponente (202) umfasst, die entsprechend vorgebbaren Konfigurationsdaten in die auf dem Host (100) installierte Ablaufsteuerungsumgebung (210) ladbar und dort ausführbar ist, wobei die zumindest eine Ablaufsteuerungskomponente (202) ein OPC UA PubSub Subscriber ist und die Ablaufsteuerungsumgebung ein virtuelles Kommunikationsnetz umfasst, innerhalb dessen die zumindest eine Ablaufsteuerungskomponente adressierbar ist,
- wobei der Host (100) dafür eingerichtet ist, der Ablaufsteuerungsumgebung (210) Ressourcen des Netzwerkadapters (101) verfügbar zu machen,
- wobei die Ablaufsteuerungskomponente (202) dafür eingerichtet ist, sich zum Empfang der Nutzdaten als Teilnehmer selektiv zumindest in einer Teilnehmer-Gruppe zu registrieren,
- wobei die Filter-Komponente (300) dafür eingerichtet ist, die Nachrichten anhand der Konfigurationsdaten, die der zumindest einen Ablaufsteuerungskomponente (202) zugeordnet sind, an die Ablaufsteuerungskomponente (202) weiterzuleiten,
- wobei der OPC UA FX Connection Manager (400) dafür eingerichtet ist, die durch die Filter-Komponente (300) zur Weiterleitung der Nutzdaten verwendeten Konfigurationsdaten zu ermitteln, wobei im OPC UA FX Connection Manager die Teilnehmer-Ressourcen-Lokatoren von miteinander logisch zu verbindenden OPC UA PubSub Publishern und Subscribern vorliegen.

## Claims

1. Method for data transmission to receivers within a sequence control environment, in which
- messages comprising payload data are sent on a cyclical and/or event-controlled basis by a sender (200) to a large number of receivers (201a, 201b), which are provided for continuously receiving the payload data,
- the receivers (201a, 201b) each comprise at least one sequence control component (202), the accordingly specifiable configuration data can be loaded into and executed on the sequence control environment (210) installed on a host (100), wherein the sequence control environment comprises a virtual communication network, within which the sequence control components can be addressed,
- resources of a network adapter (101) of the host are made available to the sequence control environment (210) by the host (100),
- to receive the payload data, the sequence control components (202) register as participants, on a selective basis, at least in a participant group,
**characterised in that**
- a filter component (300) assigned to the network adapter (101) forwards the messages to the sequence control components (202) on the basis of the configuration data that is assigned to the respective sequence control component (202),
- the sender (200) of the payload data is an OPC UA PubSub publisher and the at least one sequence control component (202) is an OPC UA PubSub subscriber,
- the configuration data used by the filter component (300) for forwarding the payload data is ascertained by means of an OPC UA FX connection manager (400), wherein the participant resource locators of OPC UA PubSub publishers and subscribers to be logically interconnected are present in the OPC UA FX connection manager.

2. Method according to claim 1,
in which the configuration data in each case comprises a port that is open for receiving the payload data as well as a host-internal address of the respective sequence control component (202), a participant resource locator assigned to the respective sequence control component for receiving the payload data and/or an identifier used by the respective sequence control component for receiving the payload data.

3. Method according to one of claims 1 or 2,
in which open ports (203a, 203b) that are assigned to the respective sequence control component (202) by means of a port detector (310), in particular UDP ports, are ascertained.

4. Method according to claim 3,
in which an identification of the open ports (203a, 203b) takes place by means of a regular scanning of ports assigned to computing processes and of interfaces of an operating system (220) of the host (100) that are assigned via said ports.

5. Method according to one of claims 3 or 4,
in which addressing information of OPC UA PubSub subscribers is ascertained by means of a subscriber detector, which is assigned to a security key service for secured publisher-subscriber communication, and in which the addressing information is resolved in host-internal addresses of the sequence control components, on the basis of which the subscriber detector or security key service configures the filter component.

6. Method according to one of claims 3 to 5,
in which the sequence control components (202) register as OPC UA PubSub subscribers with an identifier assigned to the respective OPC UA PubSub subscriber or to one of the respective sequence control components in a OPC UA global discovery service for receiving the payload data, in which, on the basis of the identifiers used by the sequence control components for registration, host-internal addresses of the sequence control components are ascertained and in which the filter component (300) is configured on the basis of the ascertained host-internal addresses.

7. Method according to one of claims 1 to 6,
in which the sequence control components (202) run isolated from one another within the sequence control environment (210) installed on the host (100) and together use an operating system kernel of the host and/or the network adapter (101) of the host.

8. Method according to claim 7,
in which the sequence control components (202) are virtual machines, containers, WebAssembly or Java bytecode and in which the sequence control environment (210) is a hypervisor, a container runtime environment, a WebAssembly runtime environment or a Java virtual machine.

9. Method according to one of claims 1 to 8,
in which the network adapter (101) of the host (100) forwards received messages, which are assigned to the participant groups, to the filter component (300) via a socket, which is assigned to a network protocol stack function unit of an operating system (220) of the host, wherein a direct forwarding or discarding of the messages takes place by means of the socket.

10. Method according to claim 9,
in which the socket is an Express Data Path socket, XDP socket.

11. Method according to one of claims 1 to 10,
in which the messages comprising payload data are sent by the sender by multicast or broadcast to the large number of receivers that are provided for the continuous receiving of the payload data, and in which the participant group is a multicast or broadcast group.

12. Host for performing a method according to one of claims 1 to 11 with
- a network adapter (101), a filter component (300) assigned to the network adapter, a sequence control environment installed on the host, at least one receiver (201a, 201b) and an OPC UA FX connection manager (400),
- wherein the receiver (201a, 201b) is configured to receive messages comprising payload data, which are sent on a cyclical and/or event-controlled basis by a sender (200) to a large number of receivers, which are provided for continuously receiving the payload data, wherein the sender (200) of the payload data is an OPC UA PubSub publisher,
- wherein the receiver (201a, 201b) comprises at least one sequence control component (202), the accordingly specifiable configuration data can be loaded into and executed on the sequence control environment (210) installed on the host (100), wherein the at least one sequence control component (202) is an OPC UA PubSub subscriber and the sequence control environment comprises a virtual communication network, within which the at least one sequence control components can be addressed,
- wherein the host (100) is configured to make resources of the network adapter (101) available to the sequence control environment (210),
- wherein the sequence control component (202) is configured to register as a participant, on a selective basis, at least in a participant group, to receive the payload data,
- wherein the filter component (300) is configured to forward the messages to the sequence control component (202) on the basis of the configuration data that is assigned to the sequence control component (202),
- wherein the OPC UA FX connection manager (400) is configured to ascertain the configuration data used by the filter component (300) for forwarding the payload data, wherein the participant resource locators of OPC UA PubSub publishers and subscribers to be logically interconnected are present in the OPC UA FX connection manager.

## Revendications

1. Procédé de transmission de données à des récepteurs dans un environnement de programmation, dans lequel
- on envoie des messages comprenant des données utiles cycliquement et/ou commandés par un évènement par un serveur (200) à une pluralité de récepteurs (201a, 201b), qui sont prévus pour une réception continue des données utiles,
- les récepteurs (201a, 201b) comprennent chacun au moins un composant (202) de programmation qui, conformément à des données de configuration pouvant être données à l'avance, peut être chargé dans l'environnement (210) de programmation installé sur un hôte (100) et y être exécuté, dans lequel l'environnement de programmation comprend un réseau de communication virtuel, dans lequel les composants de programmation peuvent être adressés,
- on rend disponible, à l'environnement (210) de programmation par l'hôte (100), des ressources d'un adaptateur (101) de réseau de l'hôte,
- les composants (202) de programmation s'enregistrent pour la réception des données utiles, comme participants, sélectivement au moins dans un groupe de participants,
**caractérisé en ce que**
- un composant (300) de filtre affecté à l'adaptateur (101) de réseau achemine, aux composants (202) de programmation, les messages au moyen des données de configuration, qui sont affectées aux composants (202) respectifs de programmation,
- l'émetteur des données utiles est un OPC UA PubSub publisher et le au moins un composant (202) de programmation un UPC UA PubSub subscriber,
- on établit, au moyen d'un OPC UA FX connection managers (400), les données de configuration utilisées par le composant (300) de filtre pour l'acheminement des données utiles, dans lequel il y a, dans l'OPC UA FX connection manager, des locateurs de ressources de participants de OPC UA PubSub publisher et souscripter à relier entre eux logiquement.

2. Procédé suivant la revendication 1,
dans lequel les données de configuration comprennent respectivement un accès ouvert pour la réception des données utiles, ainsi qu'une adresse interne d'hôte du composant (202) de programmation respectif, un locateur de ressources de participants affecté aux composants respectifs de programmation pour la réception des données utiles et/ou un identifiant utilisé pour la réception des données utiles par le composant respectif de programmation.

3. Procédé suivant l'une des revendications 1 ou 2,
dans lequel on établit, au moyen d'un détecteur (310) d'accès, des accès (203a, 203b) ouverts affectés aux composants (202) respectifs de programmation, en particulier des accès UDP.

4. Procédé suivant la revendication 3,
dans lequel une identification des accès (203a, 203b) ouverts s'effectue au moyen d'un balayage régulier d'accès affectés à des processus informatique et, affectées à ces accès, d'interfaces d'un système (220) opérateur de l'hôte (100).

5. Procédé suivant l'une des revendications 3 ou 4, .
dans lequel, au moyen d'un détecteur de subscriber, qui est affecté à un security key service pour une communication sécurisée publisher-subscriber, on établit les informations d'adressage d'OPC UA PubSub suscriber et dans lequel on déclenche les informations d'adressage en adresses internes d'hôte des composants de programmation, à l'aide desquels le détecteur de suscriber ou le security key service configure le composant de filtre.

6. Procédé suivant l'une des revendications 3 à 5,
dans lequel les composants (202) de programmation s'enregistrent comme OPC UA PubSub suscriber avec le OPC UA PubSub suscriber respectif ou avec un identifiant affecté aux composants de programmation respectifs chez un OPC UA global discovery service pour la réception des données utiles, dans lequel, à l'aide des identifiants utilisés pour l'enregistrement par les composants de programmation, on établit des adresses internes à l'hôte des composants de programmation et dans lequel on configure le composant (300) de filtre à l'aide des adresses internes d'hôte établies.

7. Procédé suivant l'une des revendications 1 à 6,
dans lequel les composants (202) de programmation se déroulent d'une manière isolée l'un de l'autre à l'intérieur de l'environnement (210) de programmation installé sur l'hôte (100), et utilisent conjointement un noyau de système opérateur de l'hôte et/ou de l'adaptateur (101) de réseau.

8. Procédé suivant la revendication 7,
dans lequel les composants (202) de programmation sont des machines virtuelles, des conteneurs, des codes d'octets webassembly ou java et dans lequel l'environnement (210) de programmation est un hyperviseur, un environnement de temps de fonctionnement de . conteneur, un environnement de temps de fonctionnement de webassembly ou une machine java virtuelle.

9. Procédé suivant l'une des revendications 1 à 8,
dans lequel l'adaptateur (101) de réseau de l'hôte (100) achemine au composant (300) de filtre par un socket, qui est affecté à une unité fonctionnelle d'empilement de protocole de réseau d'un système (220) opérateur de l'hôte, des messages reçus affectés au groupe de participants, dans lequel il s'effectue, au moyen du socket, un acheminement direct ou un rejet des messages.

10. Procédé suivant la revendication 9,
dans lequel le socket est un express data path socket XDP.

11. Procédé suivant l'une des revendications 1 à 10,
dans lequel on envoie les messages contenant des données utiles par les moteurs par multicast ou par multidiffusion, par diffusion à la pluralité de récepteurs, qui sont prévus pour la réception continue des données utiles et dans lequel le groupe de participants est un groupe de multidiffusion ou de diffusion.

12. Hôte pour effectuer un procédé suivant l'une des revendications 1 à 11 comprenant
- un adaptateur (101) de réseau, un composant (300) de filtre affecté à l'adaptateur de réseau, un environnement de programmation installé sur l'hôte, au moins un récepteur (201a, 201b) et un OPC UA FX connection manager (400),
- dans lequel le récepteur (201a, 201b) est agencé pour la réception de messages contenant des données utiles, qui sont envoyées cycliquement et/ou commandées par un évènement par un émetteur (200) à une pluralité de récepteurs, qui sont prévus pour une réception continue . des données utiles, l'émetteur (200) des données utiles étant un OPC UA PubSub publisher,
- dans lequel le récepteur (201a, 201b) comprend au moins un composant (202) de programmation qui, conformément à des données de configuration pouvant être données à l'avance, peut être chargé dans l'environnement (210) de programmation installé sur l'hôte (100) et y être exécuté, dans lequel le au moins un composant (202) de programmation est un OPC UA PubSub suscriber et l'environnement de programmation comprend un réseau de communication virtuel, dans lequel le au moins un composant de programmation peut être adressé,
- dans lequel l'hôte (100) est agencé pour rendre disponible à l'environnement (210) de programmation des ressources de l'adaptateur (101) de réseau,
- dans lequel le composant (202) de programmation est agencé, pour la réception des données utiles, pour s'enregistrer comme participant sélectivement à au moins un groupe de participants,
- dans lequel le composant (300) de filtre est agencé pour acheminer aux composants (202) de programmation les messages à l'aide des données de configuration, qui sont affectées à le au moins un composant (202) de programmation,
- dans lequel le OPC UA FX connection manager (400) est agencé pour établir les données de configuration utilisées par le composant (300) de filtre pour l'acheminement des données utiles, dans lequel, dans l'OPC UA FX connection manager, il y a des locateurs de ressources de participants de OPC UA PubSub publisher et subscriber à relier logiquement entre eux. .
